# EUROPÄISCHE PATENTANMELDUNG

(11) **EP 2 827 179 A2**
(43) Veröffentlichungstag der Anmeldung: **21.01.2015**
(21) Anmeldenummer: 14002267.4
(22) Anmeldetag: 02.07.2014
(51) Int. Cl.: G02B 19/00

(54) **Kollimatoroptik für eine Leuchte**

(30) Priorität: 17.07.2013 DE 102013011877
(71) Anmelder: ERCO GmbH, 58507 Lüdenscheid (DE)
(72) Erfinder: Bremerich, Matthias, D-58368 Lennestadt (DE)
(74) Vertreter: Roche, von Westernhagen & Ehresmann

(57) **Zusammenfassung**

Die Erfindung umfasst unter anderem eine Kollimatoroptik (11) für eine Leuchte, mit einer Längserstreckung (L) in Axialrichtung (A) und einer Breitenerstreckung (B) in einer quer zur Axialrichtung verlaufenden Querrichtung (Q), wobei die Längserstreckung der Kollimatoroptik größer ist als die Breitenerstreckung, und mit einer in Axialrichtung verlaufenden, zylindrischen oder im Wesentlichen zylindrischen Höhlung (22) zur Aufnahme wenigstens einer LED (12), die ein Innenmaß (38) in Querrichtung (Q) aufweist, das nur einen Bruchteil der Breitenerstreckung (B) der Kollimatoroptik beträgt, und die ein Innenmaß (39) in Axialrichtung (A) aufweist, das der gesamten oder im Wesentlichen der gesamten Längserstreckung (L) der Kollimatoroptik entspricht.

## Beschreibung

Die Erfindung betrifft eine Kollimatoroptik für eine Leuchte.

Die Anmelderin entwickelt seit geraumer Zeit Kollimatoroptiken. In diesem Zusammenhang wird beispielsweise verwiesen auf die deutsche Patentanmeldung DE 10 2009 053 422 A1 der Anmelderin, die eine besondere, im Wesentlichen rotationssymmetrische Kollimatoroptik betrifft.

Kollimatoroptiken dienen dazu, das von der LED emittierte Licht zu kollimieren, also zu bündeln. In der Regel strahlt eine LED das Licht gemäß einer sogenannten Lambert'schen Verteilung ab, also im Wesentlichen über einen Raumwinkelbereich von 180°. Kollimatoroptiken können das Licht einfangen, richten und bündeln.

Von der Anmelderin sind bereit Kollimatoroptiken entwickelt worden, die z. B. die Erzielung einer von einer rotationssymmetrischen Lichtverteilung abweichenden Lichtverteilung, z. B. einer ovalen Lichtverteilung, ermöglichen. In diesem Zusammenhang wird beispielsweise verwiesen auf die nachveröffentlichte deutsche Patentanmeldung DE 10 2012 007 307 A1 der Anmelderin, deren Inhalt hiermit, auch zum Zwecke der Bezugnahme auf einzelne oder mehrere Merkmale, in den Inhalt der vorliegenden Patentanmeldung mit eingeschlossen wird.

Mit den bekannten, und zur Verfügung stehenden Kollimatoroptiken gelingt es nicht, die in besonderen Anwendungsfällen gewünschten langgestreckt ausgebildeten, schmalen oder sehr schmalen oval-flood oder linearen Lichtverteilungen zu generieren.

Der Erfindung stellt sich daher die Aufgabe, eine Kollimatoroptik bereitzustellen, mit der eine langgestreckte, schmale Lichtverteilung generierbar ist.

Die Erfindung löst diese Aufgabe zunächst mit den Merkmalen des Anspruches 1.

Das Prinzip der Erfindung besteht im Wesentlichen darin, eine Kollimatoroptik bereitzustellen, die langgestreckt ausgebildet ist. Dies bedeutet, dass die Kollimatoroptik Abmessungen aufweist, die sich in Axialrichtung weiter erstrecken als in einer Richtung quer zur Axialrichtung, der sogenannten Querrichtung. Die Kollimatoroptik ist insoweit im Wesentlichen langgestreckt ausgebildet.

Die Kollimatoroptik weist des Weiteren eine Höhlung auf. Diese ist zylindrisch oder im Wesentlichen zylindrisch ausgebildet. Die Höhlung dient der Aufnahme einer oder mehrerer LEDs.

Vorteilhafterweise erstreckt sich die Höhlung von einem Ende der Kollimatoroptik bis zum anderen Ende der Kollimatoroptik.

Die Höhlung weist ein Innenmaß in Querrichtung auf, welches nur einen Bruchteil der Breitenerstreckung der Kollimatoroptik, also der Erstreckung der Kollimatoroptik in Querrichtung, beträgt. Anders ausgedrückt erstreckt sich die Höhlung in Querrichtung nur über einen Teil der Breite der Kollimatoroptik in Querrichtung. Beispielsweise kann das Innenmaß der Höhlung zwischen einem Sechstel und der Hälfte der Erstreckung der Kollimatoroptik in Querrichtung betragen.

Die Höhlung weist des Weiteren gemäß der Erfindung ein Innenmaß in Axialrichtung auf, welches der gesamten oder im Wesentlichen der gesamten Längserstreckung der Kollimatoroptik entspricht. Anders ausgedrückt ist die Höhlung in Axialrichtung deutlich länger ausgebildet als in Querrichtung.

Die erfindungsgemäße geometrische Ausgestaltung der Kollimatoroptik und der darin angeordneten Höhlung für eine oder mehrere LEDs ermöglicht eine Konstruktion der Kollimatoroptik, die unter Verwendung von Totalreflektionsflächen eine Bündelung des abgestrahlten Lichtes und die Erzielung einer sehr engen Lichtverteilung in einer Ebene erzielt, nämlich in einer Ebene, die die Querrichtung entält. Andererseits ermöglicht diese Kollimatoroptik die Erzielung einer sehr breiten Lichtverteilung, ggf. auch einer ungerichteten, oder auch nur teilweise gerichteten Lichtverteilung, entlang einer quer dazu stehenden Ebene, die die Axialrichtung enthält.

Hierdurch besteht die Möglichkeit, eine sehr schmale, langgestreckte, flache, ovale Lichtverteilung zu generieren, wie sie in bestimmen Anwendungsfällen gewünscht ist.

Gemäß einer vorteilhaften Ausgestaltung der Erfindung ist die Leuchte als Einbauleuchte ausgebildet, und bodenseitig angeordnet. Die Kollimatoroptik kann in dieser Situation der Ausleuchtung einer Wandfläche dienen. Insbesondere hohe Wandflächen können auf diese Weise gleichmäßig geflutet werden. Auch besteht die Möglichkeit, durch die so erzielten breiten Lichtverteilungen eine Wand sehr gleichmäßig auszuleuchten. Letzteres ist erfindungsgemäß auch möglich, wenn mehrere Leuchten unter einem Abstand, insbesondere unter einem großen Abstand voneinander, positioniert werden. Dabei ist erfindungsgemäß ein Verhältnis von Wandabstand zu Leuchtenabstand zwischen 1 zu 1,5 bis 1 zu 4 realisierbar.

Insbesondere besteht auch die Möglichkeit, mehrere erfindungsgemäße Kollimatoroptiken, bzw. mehrere Leuchten, enthaltend jeweils mindestens eine Kollimatoroptik, in Reihe nebeneinander anzuordnen, um die gesamte Breite der Wand abzudecken.

Es besteht die Möglichkeit, dass jede Leuchte eine Kollimatoroptik aufweist oder eine Leuchte mehrere Kollimatoroptiken aufweist.

Gemäß einer alternativen vorteilhaften Ausgestaltung der Erfindung ist die Leuchte als Pollerleuchte ausgebildet, und dient der Ausleuchtung von Bodenflächen im Außenraum.

Gemäß einer weiteren vorteilhaften Ausgestaltung der Erfindung weist die Kollimatoroptik optische Grenzflächen auf, die der Höhlung zugeordnet sind, und die eine Kollimation des Lichtes entlang einer Ebene veranlassen, die die Querrichtung enthält. Diese Kollimation kann beispielsweise bewirken, dass eine Lichtabstrahlung entlang dieser Ebene unter einem Winkel zwischen 3° und 40°, vorzugsweise zwischen 5° und 20° erfolgt. Zugleich können die optischen Grenzflächen dafür sorgen, dass entlang einer Ebene, die die Axialrichtung enthält, also entlang einer Ebene, die quer zu der zuvor beschriebenen Ebene steht, eine breite Lichtabstrahlung unter einem großen Lichtwinkel erfolgt.

Gemäß einem weiteren Aspekt der Erfindung wird die oben beschriebene Aufgabe durch eine Kollimatoroptik mit den Merkmalen des Anspruches 3 gelöst.

Zur Vermeidung von Wiederholungen wird auf die oben beschriebenen Ausführungen verwiesen, die in gleicher oder analoger Weise gelten.

Die Erfindung löst die oben beschriebene Aufgabe weiter auch mit einer Kollimatoroptik mit den Merkmalen des Anspruches 5.

Gemäß der Erfindung besitzt die Kollimatoroptik einen die Querrichtung enthaltenen Querschnitt, der eine Schmetterlingsform ausbildet. Die Schmetterlingsform umfasst zwei Flügel. Die Flügel sind spiegelsymmetrisch um eine Mittelachse zueinander ausgebildet und positioniert und aufeinander zugewandt und mittig miteinander verbunden.

Die Kollimatoroptik weist eine Höhlung auf, die eine Lichteintrittsfläche bereitstellt. An der gegenüberliegenden Seite der Kollimatoroptik befindet sich eine Lichtaustrittsfläche. Die Flügel weisen Randabschnitte auf, die nahe der Lichtaustrittsfläche angeordnet sind und Randabschnitte, die entfernt von der Lichtaustrittsfläche angeordnet sind.

Die LED, die sich in der Höhlung befindet, emittiert Licht. Unterschiedliche Lichtanteile des von der LED emittierten Lichtes nehmen unterschiedliche Lichtwege.

Lichtanteile, die radial außen von der LED emittiert werden, treten in die Lichteintrittsfläche der Höhlung ein, und gelangen zu Totalreflektionsflächen an einem Randabschnitt des Flügels, der der Lichtaustrittsfläche fern ist. Diese Lichtanteile treten - obwohl radial außen emittiert - radial innen durch die Lichtaustrittsfläche aus.

Andere Lichtanteile der LEDs hingegen, die radial innen emittiert werden, werden nach Eintreten durch die Lichteintrittsfläche der Kollimatoroptik zu Totalreflektionsflächen gelenkt, die sich an einem Randabschnitt der Flügel befinden, der nahe der Lichtaustrittsfläche angeordnet ist. Diese Lichtanteile treten radial außen an der Lichtaustrittsfläche durch die Lichtaustrittsfläche aus.

Es findet also hier eine Art Radialtausch von Lichtanteilen statt.

Die vorstehenden Bemerkungen, einschließlich des Begriffs "radial", beziehen sich auf eine Betrachtung des Querschnittes der Kollimatoroptik, der die Querrichtung enthält.

Entlang einer Schnittebene durch die Kollimatoroptik, die die Axialrichtung enthält, sind die zuvor beschriebenen Totalreflektionsflächen nicht vorhanden. Stattdessen ist dort vorteilhafterweise ein Linsenelement vorgesehen. Das Linsenelement kann planparallel ausgebildet sein. Es kann allerdings alternativ auch Abschnitte aufweisen, die gekrümmte Oberflächen umfassen. Insbesondere können Abschnitte mit gekrümmten Oberflächen in unmittelbarer Nachbarschaft der LEDs an dem Linsenelement vorgesehen sein.

Die Erfindung löst die gestellte Aufgabe gemäß einem weiteren Aspekt mit den Merkmalen des Anspruches 6.

Gemäß der Erfindung ist vorgesehen, dass ein die Querrichtung enthaltender Querschnitt der Kollimatoroptik einen Mittelabschnitt und zwei den Mittelabschnitt einfassende Seitenabschnitte aufweist.

Der Mittelabschnitt kann als Sammellinse ausgebildet sein und hierzu beispielsweise der Höhlung zugewandte, konvex gekrümmte Abschnitte und der Lichtaustrittsfläche zugewandte, ebenfalls konvex gekrümmte Abschnitte aufweisen. Der Mittelabschnitt der Kollimatoroptik empfängt die zentralen, d. h. radial innen liegenden, von der LED emittierten Lichtanteile.

Die radial außen emittierten Lichtanteile treffen auf Totalreflektionsflächenabschnitte, die an den Seitenabschnitten angeordnet sind. In Folge der Totalreflektion gelangen diese Lichtanteile direkt zur Lichtaustrittsfläche, und zwar radial außen.

Gemäß einer vorteilhaften Ausgestaltung der Erfindung weist die Kollimatoroptik eine Lichtaustrittsfläche mit einer im Wesentlichen rechteckförmigen Kontur auf. Dies ermöglicht eine besonders einfache Konstruktion und eine Abstimmung der Kontur der Lichtaustrittsfläche auf die Kontur der Kollimatoroptik.

Gemäß einer vorteilhaften Ausgestaltung der Erfindung weist die Kollimatoroptik einen die Querrichtung enthaltenen Querschnitt auf, der Seitenwandabschnitte umfasst, welche Totalreflektionsflächen bereitstellen. Hierdurch wird auf besonders einfache konstruktive Möglichkeit eine Kollimation der Lichtstrahlen in dieser Ebene ermöglicht.

Gemäß einer weiteren vorteilhaften Ausgestaltung der Erfindung weist die Kollimatoroptik in Axialrichtung einen konstanten oder einen im Wesentlichen konstanten Querschnitt auf.

Als ein konstanter oder ein im Wesentlichen konstanter Querschnitt wird gemäß der Erfindung eine Geometrie verstanden, die sich im Wesentlichen in Axialrichtung fortsetzt. Dies schließt auch ein, dass an unterschiedlichen Stellen, insbesondere unmittelbar benachbart den LEDs, zusätzliche Wölbungen oder besondere Grenzflächen positioniert sind.

Gemäß einer weiteren vorteilhaften Ausgestaltung der Erfindung weist die Kollimatoroptik einen Querschnitt auf, der die Axialrichtung enthält, wobei dieser Querschnitt von einem Linsenelement bereitgestellt ist. Als Linsenelement im Sinne der vorliegenden Patentanmeldung wird jedes in Axialrichtung langgestreckte, mit einer - im Verhältnis zu seiner Axialerstreckung - geringen Wandstärke ausgestattete, Element versehen, welches entweder planparallele Flächen aufweist oder dessen Eingangs- und/oder dessen Ausgangsseite eine Krümmung aufweist.

Angemerkt sei an dieser Stelle, dass die Wandstärke des Linsenelementes, in Abhängigkeit von dem Abstand der Schnittebene zu einer Mittelebene der Kollimatoroptik, variieren kann.

Um die, bezogen auf die Querschnittsebene der Kollimatoroptik, die die Axialrichtung enthält, breite Abstrahlcharakteristik zu ermöglichen, wird das Licht in dieser Ebene nicht oder allenfalls nur geringfügig kollimiert oder ggf. noch bezüglich des Abstrahlwinkels verbreitert.

Gemäß einer vorteilhaften Ausgestaltung der Erfindung ist das Innenmaß der Höhlung in Axialrichtung entlang der Längsrichtung der Kollimatoroptik freigehalten. Dies bedeutet, dass die zylindrisch ausgebildete Höhlung entweder vollständig durchgehend ausgestaltet ist, oder, beispielsweise endseitig, kappenförmige Wandabschnitte aufweist, die die zylindrische Höhlung endseitig begrenzen.

Gemäß einer vorteilhaften Ausgestaltung der Erfindung ist die Kollimatoroptik bezüglich einer Mittelachse, die parallel zu der Axialrichtung ausgebildet ist, symmetrisch oder im Wesentlichen symmetrisch ausgebildet. Dies ermöglicht eine besonders einfache Konstruktion. Diese Formulierung schließt auch ein, dass im Bereich der Lichtaustrittsfläche in asymmetrischer Positionierung Prismenflächen angeordnet sein können, die einen außermittigen Lichtschwerpunkt der Lichtverteilung ermöglichen können.

Gemäß einem weiteren Aspekt bezieht sich die Erfindung auf eine Leuchte, die eine vorbeschriebene Kollimatoroptik enthält. Die Leuchte ist insbesondere ortsfest ausgebildet und dient der Ausleuchtung von Gebäude- oder Gebäudeteilflächen.

Gemäß einer vorteilhaften Ausgestaltung der Erfindung können in einer Höhlung einer Kollimatoroptik eine oder mehrere LEDs angeordnet werden. Vorteilhafterweise können dort mehrere LEDs, in Axialrichtung voneinander, insbesondere regelmäßig, beabstandet vorgesehen werden. Beispielsweise können in einer Kollimatoroptik drei LEDs oder drei Gruppen von LEDs angeordnet werden.

Gemäß einer weiteren vorteilhaften Ausgestaltung der Erfindung generiert die Kollimatoroptik eine symmetrische Lichtverteilung, wobei die Symmetrieachse parallel zur Axialrichtung und mittig bezogen auf die Kollimatoroptik verläuft.

Gemäß einer alternativen Ausgestaltung der Erfindung erzeugt die Kollimatoroptik eine geringfügig asymmetrische Lichtverteilung, derart, dass ein Lichtschwerpunkt außermittig der Symmetrieebene vorgesehen ist. Dies kann beispielsweise durch Prismenelemente im Bereich der Lichtaustrittsfläche erreicht werden, die, bezogen auf die Längsmittelachse der Kollimatoroptik, unsymmetrisch angeordnet sind.

Weitere Vorteile der Erfindung ergeben sich aus den nicht zitierten Unteransprüchen, sowie anhand der nachfolgenden Beschreibung der in den Zeichnungen dargestellten Ausführungsbeispiele. Darin zeigen:
- Fig. 1: in einer perspektivischen, schematischen Ansicht eine erfindungsgemäße Leuchte, die als Bodenleuchte ausgebildet ist, und unter Zuhilfenahme einer erfindungsgemäßen Kollimatoroptik eine Seitenwand eines Gebäuderaumes ausleuchtet,

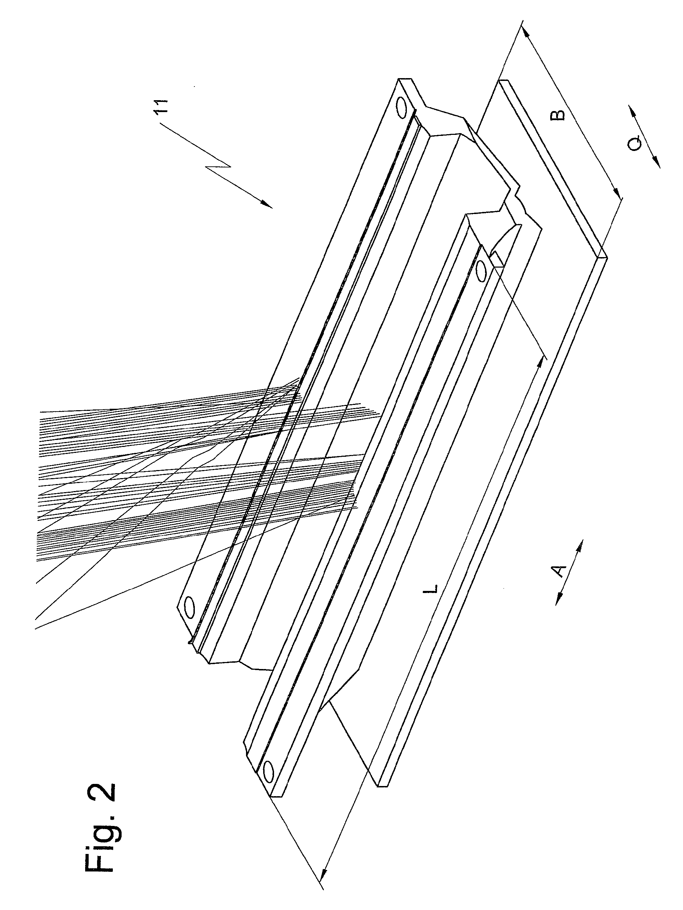

- Fig. 2: ein erstes Ausführungsbeispiel einer Kollimatoroptik in einer perspektivischen Ansicht unter Veranschaulichung einiger beispielhafter Lichtstrahlen,
- Fig. 3a: das Ausführungsbeispiel der Fig. 1 in einer schematischen, teilgeschnittenen Darstellung, etwa entlang Schnittlinie IIIa-IIIa in Fig. 1,
- Fig. 3b: in einer teilgeschnittenen, schematischen Ansichtsdarstellung die Leuchte der Fig. 1, etwa entlang Schnittlinie IIIb-IIIb in Fig., unter Veranschaulichung eines Summenspektrums der Lichtstrahlen,
- Fig. 4: die Kollimatoroptik der Fig. 3a in einer vergrößerten Einzelansicht, mit einem beispielhaft angedeuteten Lichtstrahlenverlauf,
- Fig. 5: die Kollimatoroptik der Fig. 4 und den angedeuteten Lichtstrahlenverlauf, etwa entlang Schnittlinie V-V in Fig. 4,
- Fig. 6: die Kollimatoroptik der Fig. 4 in einer Darstellung gemäß Fig. 5, sowie den Lichtstrahlenverlauf, wiederum schematisch angedeutet, etwa entlang Schnittlinie VI-VI in Fig. 4,
- Fig. 7a: ein weiteres Ausführungsbeispiel einer erfindungsgemäßen Kollimatoroptik in einer Darstellung gemäß Fig. 2,
- Fig. 7b: das Ausführungsbeispiel der Fig. 7a in einer Rückansicht, etwa gemäß Ansichtspfeil Vllb in Fig. 7a,
- Fig. 8a: das Ausführungsbeispiel einer Kollimatoroptik der Figuren 7a und 7b im Einbauzustand in einer Leuchte, die als Pollerleuchte ausgebildet ist, unter schematischer Veranschaulichung des Lichtstrahlenverlaufes,
- Fig. 8b: die Kollimatoroptik der Fig. 8a in Alleinstellung unter Weglassung von Leuchtengehäuse und Lichtaustrittsscheibe in einer sehr schematischen Ansichtsdarstellung unter Veranschaulichung des Lichtstrahl-Summenspektrums, etwa gemäß Ansichtspfeil VIIIb in Fig. 8a,
- Fig. 9: die Kollimatoroptik der Fig. 8a in einer vergrößerten Einzeldarstellung, unter beispielhafter Veranschaulichung des Lichtstrahlenverlaufs,
- Fig. 10: die Kollimatoroptik der Fig. 9 in einer schematischen Darstellung etwa entlang Schnittlinie X-X in Fig. 9, und
- Fig. 11: die Kollimatoroptik der Fig. 9 in einer schematischen Schnittdarstellung etwa entlang Schnittlinie XI-XI in Fig. 9.

Der nachfolgenden Figurenbeschreibung sei vorausgeschickt, dass in den Zeichnungen gleiche oder miteinander vergleichbare Teile oder Elemente, auch soweit unterschiedliche Ausführungsbeispiele betroffen sind, der Übersichtlichkeit halber mit gleichen Bezugszeichen, teilweise unter Hinzufügung kleiner Buchstaben, bezeichnet worden sind.

Weiter sei an dieser Stelle angemerkt, dass Merkmale oder Merkmalsgruppen, die in Verbindung mit einem Ausführungsbeispiel der Erfindung in der Figurenbeschreibung oder in der Beschreibungseinleitung erwähnt oder in den Zeichnungen gezeigt sind, im Rahmen der vorliegenden Erfindung gleichermaßen auch bei jedem anderen Ausführungsbeispiel der Erfindung vorgesehen sein können.

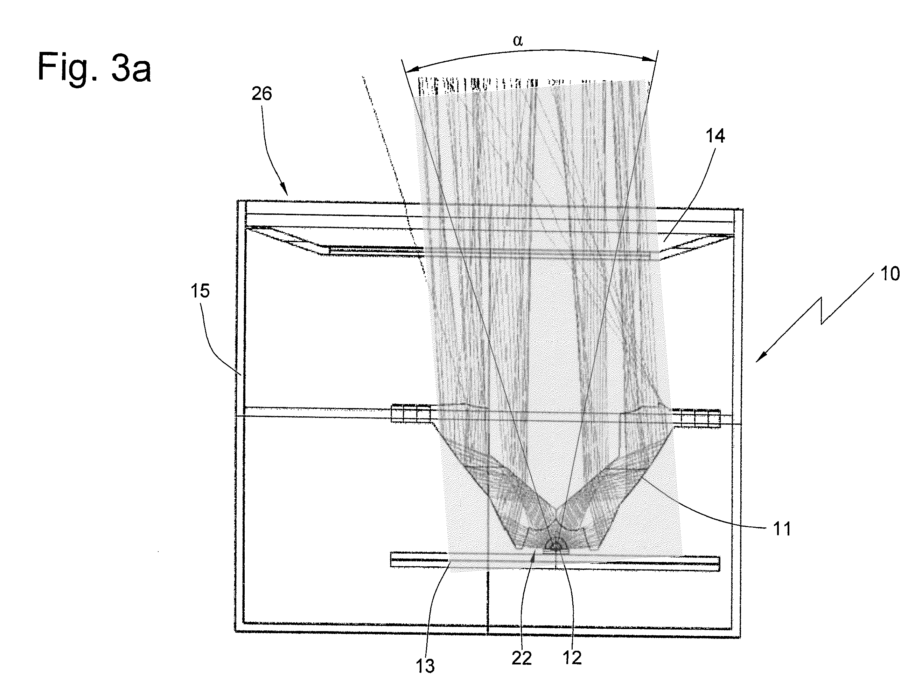

Die erfindungsgemäße, in Ihrer Gesamtheit mit 10 bezeichnete Leuchte weist ausweislich des Ausführungsbeispiels der Fig. 3a eine Kollimatoroptik 11 auf. Diese übergreift mit einer Höhlung 22 eine oder mehrere LEDs 12, die auf einer Platine 13 befestigt sind. Die Leuchte 10 umfasst ein Gehäuse 15, welches den Innenraum der Leuchte gegenüber dem Außenraum mechanisch, dicht und sicher verschließt. Im Bereich der Lichtaustrittsöffnung 26 der Leuchte ist ein Abschlussglas 14 angeordnet.

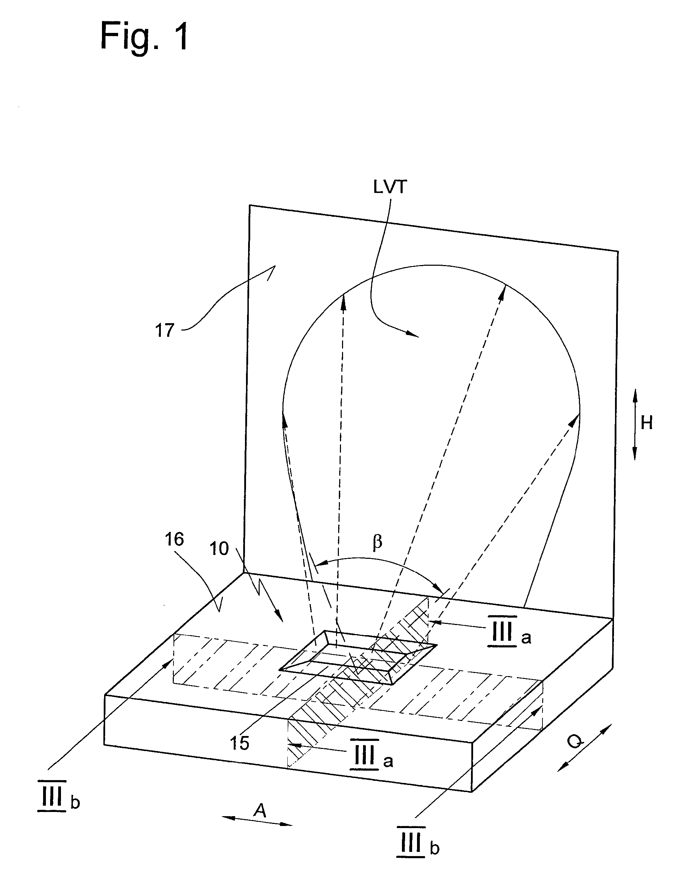

Fig. 1 zeigt die Leuchte der Fig. 3a im Einbauzustand in einer Bodenwand 16 eines Gebäuderaumes. Die Leuchte 10 dient der Ausleuchtung einer Seitenwand 17 dieses Raumes mit einer großen Höhe H.

Die Leuchte 10 soll gemäß der Erfindung relativ nahe benachbart der Seitenwand 17 positioniert werden, so dass der Abstand zwischen Seitenwand 17 und der Leuchte 10 in Querrichtung Q kleingehalten werden sein soll.

Beabsichtigt ist, die Seitenwand 17 breitflächig gleichmäßig auszuleuchten. Hierzu weist die Leuchte 10 in einer die Axialrichtung A enthaltenden Ebene einen großen Abstrahlwinkel β auf. Entlang einer Schnittebene, die die Querrichtung Q enthält, soll die Leuchte aber einen sehr geringen Abstrahlwinkel α aufweisen.

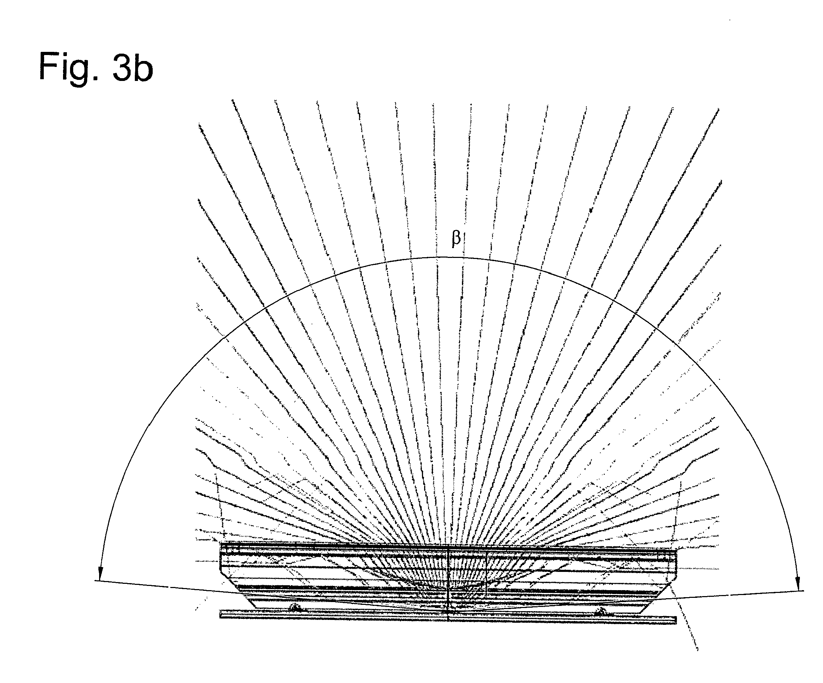

Anhand des Vergleiches der Figuren 3a und 3b werden diese unterschiedlichen Abstrahlwinkel α, β erläutert:

Fig. 3a stellt eine Schnittansicht in sehr schematischer Darstellung durch die Leuchte, etwa entlang der Schnittlinie IIIa-IIIa in Fig. 1, dar. Man erkennt hier, dass entlang dieser Schnittebene eine sehr enge Abstrahlung unter einem nur geringen Abstrahlwinkel α erreicht werden kann. Der Winkel α kann beispielsweise 5° oder 10° oder 20° oder einen beliebigen Wert, insbesondere zwischen 3° und 30° betragen.

Fig. 3b zeigt in einer sehr schematischen Darstellung das Lichtabstrahlverhalten der Kollimatoroptik in einer Ebene quer dazu, etwa entlang der Schnittdarstellung IIIb-IIIb in Fig. 1. Hier sind summarisch zahlreiche Lichtstrahlen aufgezeigt. Der Abstrahlwinkel ist mit β bezeichnet.

Der Abstrahlwinkel β ist bei diesem Ausführungsbeispiel und auch bei allen anderen Ausführungsbeispielen viel größer als der Abstrahlwinkel α.

Der Abstrahlwinkel β kann beispielsweise bis zu 180° betragen. Der Winkel β ist aber in jedem Fall größer als 90°.

Mit einer so beschriebenen Abstrahlcharakteristik kann die in Höhenrichtung H hoch ausgebildete Seitenwand 17 gleichmäßig ausgeleuchtet werden.

Die auf der Seitenwand 17 zu erzeugende Lichtverteilung LVT wird durch eine Anordnung optischer Grenzflächen erreicht, die nachfolgend beschrieben werden soll:

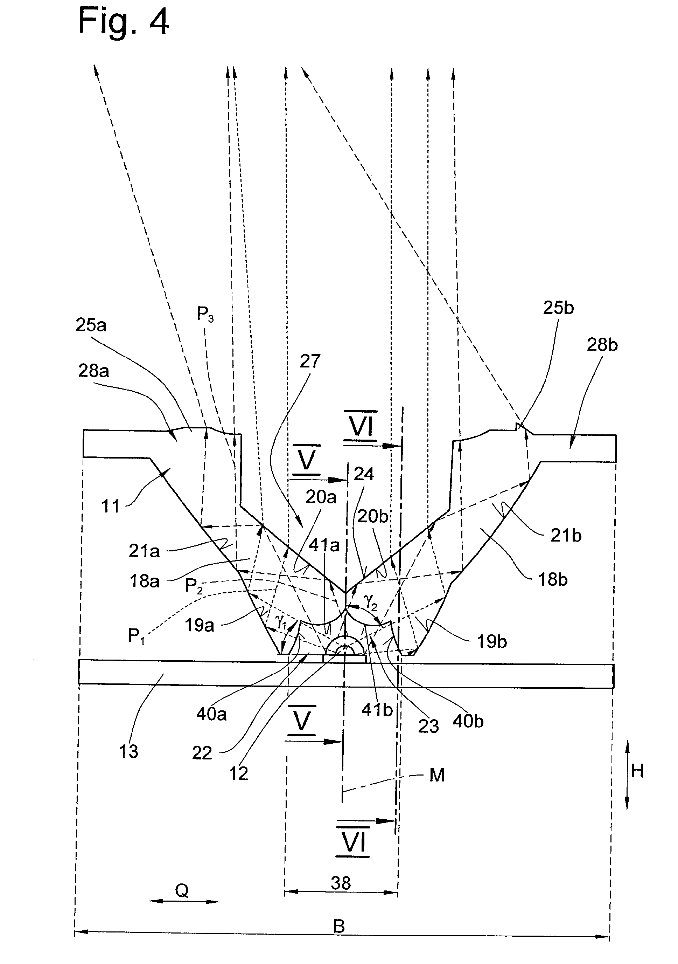

Ausweislich der Fig. 4 ist der die Querrichtung Q enthaltene Querschnitt der Kollimatoroptik 11 im Wesentlichen schmetterlingsartig ausgebildet, und umfasst zwei Flügel 18a, 18b. Die Kollimatoroptik ist bezüglich einer Mittelebene 14, die im Wesentlichen durch die LED 12 hindurch verläuft, spiegelsymmetrisch ausgebildet.

Jeder Flügel 18a, 18b verfügt über eine Vielzahl von Grenzflächen, die für das besondere Abstrahlverhalten der Kollimatoroptik 11 sorgen. Die Lichtstrahlen sind sozusagen summarisch sehr schematisch in Fig. 3a angedeutet. Anhand der Fig. 4 sollen einige Funktionsbereiche erläutert werden:

Von der LED 12 aus wird Licht in nahezu der gesamten Halbraumbereich von 180° emittiert. Die Kollimatoroptik 11 der Fig. 4 unterscheidet dabei radial außen liegende Lichtanteile, die entlang dem Raummittelbereich γ₁ emittiert werden und radial innen liegende Lichtanteile, die entlang dem Raummittelbereich γ₂ emittiert werden. Die radial äußeren Lichtanteile treten durch einen gekrümmten Seitenwandabschnitt 40a, 40b, der einen Bestandteil der Lichteintrittsfläche 23 der Kollimatoroptik 11 ausbildet, in die Kollimatoroptik 11 ein. Sie treffen dort auf Totalreflektionsflächen 19. Von diesen werden die Lichtstrahlen, wie beispielsweise der Lichtstrahl P1, reflektiert und zu einer weiteren optischen Grenzfläche 20a geleitet. Diese optische Grenzfläche 20a bildet einen Bestandteil der Lichtaustrittsfläche 24 der Kollimatoroptik 11 aus.

Nach einer Brechung an dieser Grenzfläche 20a tritt der Strahl durch die Lichtaustrittsöffnung 24 aus und verlässt die Kollimatoroptik parallel oder im Wesentlichen parallel zur Höhenrichtung H.

Diejenigen Lichtanteile der LED 12, die zentral emittiert werden, also die radial inneren Lichtanteile, treffen auf gekrümmte Flächenabschnitte 41 a, 41 b der Lichteintrittsfläche 23 und gelangen sodann auf Totalreflektionsabschnitte 20a, 20b. Die Grenzflächen, die bei dem zuvor beschriebenen Lichtstrahl P1 also nur für eine Brechung sorgten, dienen nun dazu, die Lichtstrahlen, beispielsweise den Lichtstrahl P2, dort total zu reflektieren und auf einen außen liegenden Randabschnitt des Flügels zu werfen. Dort ist wiederum eine Totalreflektionsfläche 21a vorgesehen, an der der Lichtstrahl (z. B. der Lichtstrahl P2) reflektiert wird und als Lichtstrahl P3 zur Lichtaustrittsfläche 24 gelangt und dort die Kollimatoroptik verlässt.

Es findet also eine Art Radialtausch von Lichtanteilen statt; bei Betrachtung des Querschnittes der Fig. 4, der die Querrichtung Q enthält, werden radial außen emittierte Lichtanteile der LED nach innen hin gelenkt und radial innen, d. h. zentrale Lichtanteile der LED, nach außen verlagert. Hierdurch kann eine besonders enge Kollimation und Bündelung erreicht werden.

Die Höhlung 22 der Kollimatoroptik 11 der Fig. 4 besitzt einen zirkuszeltartigen Querschnitt und erstreckt sich in Axialrichtung A von einem Ende der Kollimatoroptik 11 zum anderen Ende der Kollimatoroptik.

Neben der Höhlung erstrecken sich auch die optischen Grenzflächen, nämlich die gekrümmten Flächenabschnitte 40a, 40b und 41 a, 41 b, sowie auch die Totalreflektionsflächen 19a, 19b, 21 a, 21 b und die als Grenzflächen, bzw. Totalreflektionsflächen fungierenden Flächen 20a, 20b in Axialrichtung A von einem Ende der Kollimatoroptik 11 hin zum anderen Ende der Kollimatoroptik.

Bei dem Ausführungsbeispiel der Fig. 4 ist die Kollimatoroptik streng zylindrisch ausgebildet und kann beispielsweise von einem extrudierten Profil gebildet sein.

Von der Erfindung sind aber auch Kollimatoroptiken umfasst, bei denen die beschriebene Geometrie der Grenzflächen noch zusätzliche Grenzflächen aufweist, die an bestimmten Axialpositionen der Kollimatoroptik vorgesehen sind.

Die Kollimatoroptik 11 hat auf ihrer Lichtaustrittsseite 24 ebenfalls eine im Wesentlichen im Querschnitt dreieckförmige Höhlung 17. Auch diese Höhlung ist im Wesentlichen zylindrisch ausgebildet.

Bemerkenswert ist, dass sich im Bereich der Lichtaustrittsfläche 24, und zwar an den radial abstehenden Enden 28a, 28b der Flügel noch angedeutete Prismen 25a, 25b befinden, die gewisse Lichtanteile, bezogen auf Fig. 4, nach links verlagern, um so einen Lichtschwerpunkt zu erzeugen. Durch diese Prismen werden Lichtasymmetrien der Lichtverteilung erzielt, die für die gewünschte homogene Ausleuchtung einer hohen Wand 17 sorgen können.

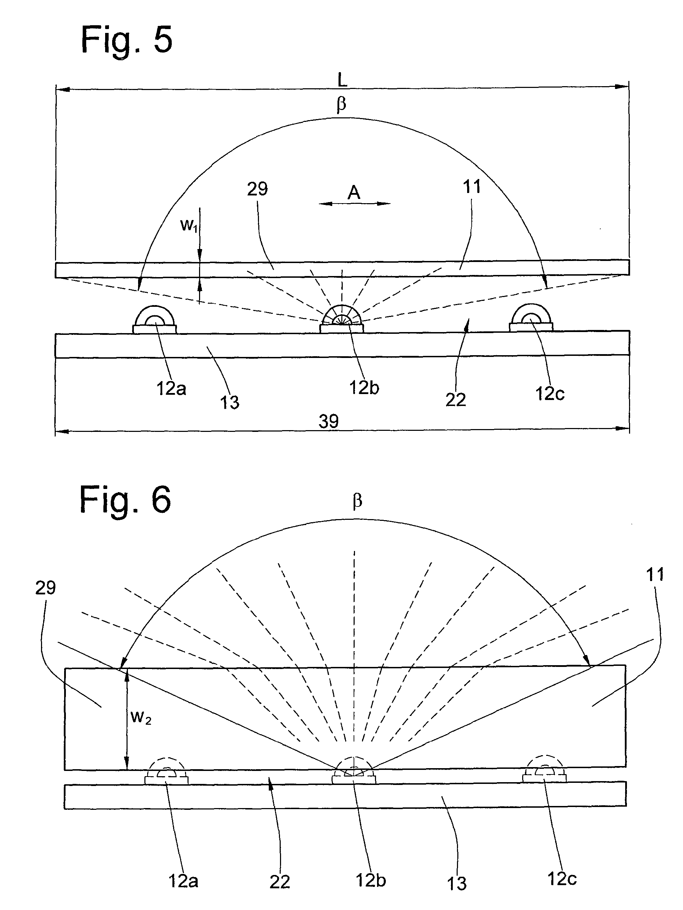

Die Figuren 5 und 6 zeigen sehr schematisch unterschiedliche Schnittdarstellungen durch die Kollimatoroptik der Fig. 4, etwa entlang der Schnittlinien V-V und VI-VI in Fig. 4.

Bemerkenswert ist, dass, wie die Pfeildarstellungen der Figuren 3a und 4 deutlich machen, im Bereich der Mittenebene M der Kollimatoroptik 11 kein Lichtaustritt erfolgt. Fig. 5 veranschaulicht Lichtemissionen nur für eine, nämlich die mittlere LED 12b. Dem Betrachter ist deutlich, dass jede der LEDs 12a, 12b, 12c ein identisches oder ähnliches Abstrahlverhalten zeigt, und dass sich in Summe eine Überlagerung der unterschiedlichen Lichtverteilungen ergibt.

Gemäß der Darstellung der Fig. 5 werden eine Reihe von Lichtstrahlen von der LED 12b emittiert, treffen auf das Linsenelement 29, und verschwinden darin. Der Umstand, dass die Lichtstrahlen gemäß Fig. 5 in dem Linsenelement 29 enden, ist darin begründet, dass - wie Fig. 4 veranschaulicht - die Lichtstrahlen, bezogen auf die Mittenebene M, radial nach außen gelenkt werden und nicht im Bereich der Mittenebene M aus der Kollimatoroptik 11 austreten.

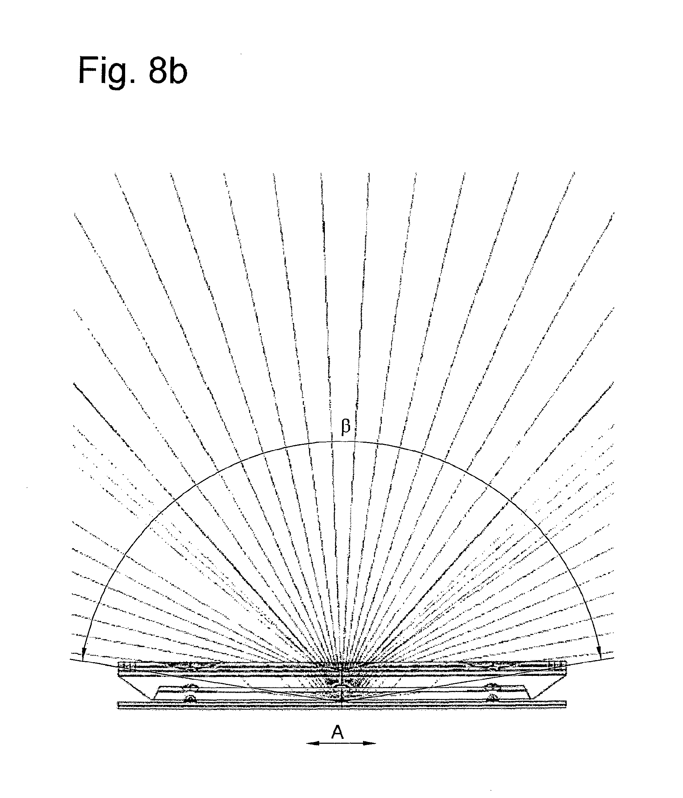

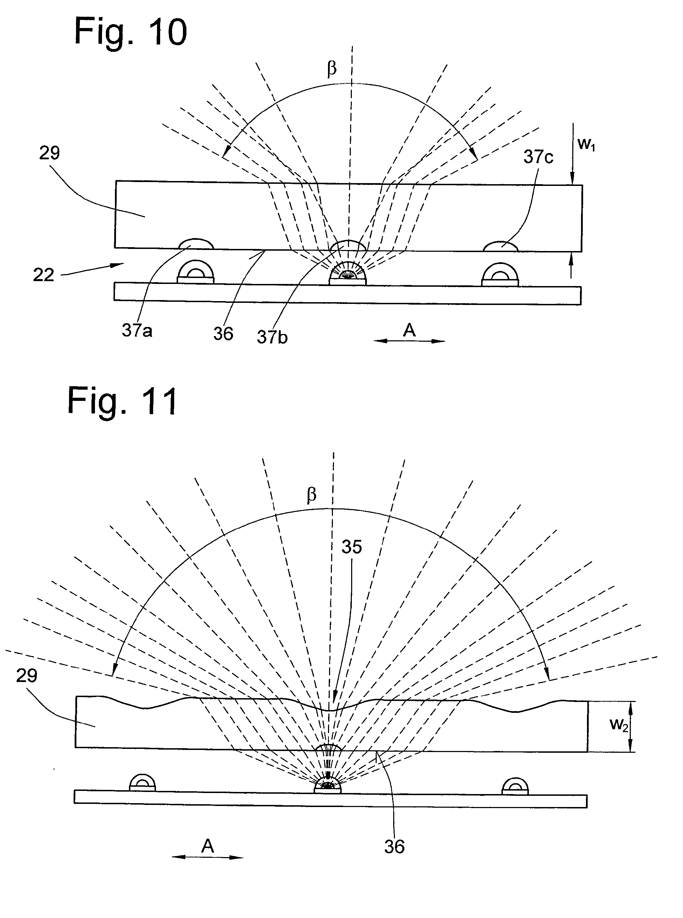

In diesem Zusammenhang sei angemerkt, dass die Fig. 3b und gleichermaßen die später noch zu erläuternde Fig. 8b jeweils ein Gesamtspektrum sämtlicher Lichtstrahlen, die von der Kollimatoroptik emittiert werden andeutet, wohingegen die Schnittdarstellungen der Figuren 5 und 6 (sowie der später noch zu erläuternden Figuren 10 und 11) jeweils nur diejenigen Lichtstrahlen andeuten, die in der jeweiligen Papierebene verlaufen.

Das Linsenelement 29 ist bei dem Ausführungsbeispiel planparallel ausgebildet, und weist eine Wandstärke W1 im Bereich der Mittenebene M auf, und eine demgegenüber deutlich größere Wandstärke W2 im Bereich der Schnittebene VI-VI in Fig. 4.

Der Begriff "Linsenelement" oder "Linsenplatte" bezieht sich insoweit auf die sich in den Schnittebenen der Figuren 5 und 6, sowie den Ebenen parallel dazu ergebenden Darstellungen.

Die Lichtstrahlen der Fig. 5 enden also in dem Linsenelement, da dort eine Reflektion nach außen erfolgt, also hin in eine andere Ebene. Gleichermaßen deutet Fig. 6 an, dass gewisse Lichtstrahlanteile diese Schnittebene erst unter einem radialen Abstand von der LED erreichen.

Bemerkenswert ist, dass sich die Höhlung 22 von einem Ende der Kollimatoroptik 11 zu dem anderen Ende erstreckt, ohne, dass hier irgendwelche Hindernisse, die den Lichtausfall beschränkten könnten, vorgesehen sind. Demzufolge ist es unter Zuhilfenahme des Linsenelementes 29 möglich, eine sehr breite Lichtverteilung, angedeutet durch den Abstrahlwinkel β, zu erzielen.

Das Linsenelement kann dabei, falls gewünscht, zusätzlich auch zu einer Aufspreizung des Lichtes beitragen.

Vorteilhafterweise ist bei dieser Ausführungsform die Kollimatoroptik 11 als extrudiertes Profil bereitgestellt und weist insoweit einen vollständig konstanten Querschnitt auf.

Das Linsenelement kann, was in den Ausführungsbeispielen der Figuren 5 und 6 nicht dargestellt ist, noch mit zusätzlichen Mitteln versehen sein, beispielsweise mit Krümmungen, Sicken, oder dergleichen, um den Abstrahlwinkel β zu vergrößern.

Es besteht auch die Möglichkeit, und es von der Erfindung auch umfasst, wenn das Linsenelement 29 geringfügig Licht-kollimierende Abschnitte umfasst.

Die Lichtverteilung weist allerdings entlang einer Ebene, die die Axialrichtung A enthält, immer einen Abstrahlwinkel auf, der erheblich größer ist als der Abstrahlwinkel der Lichtverteilung entlang einer Ebene, die die Querrichtung Q enthält.

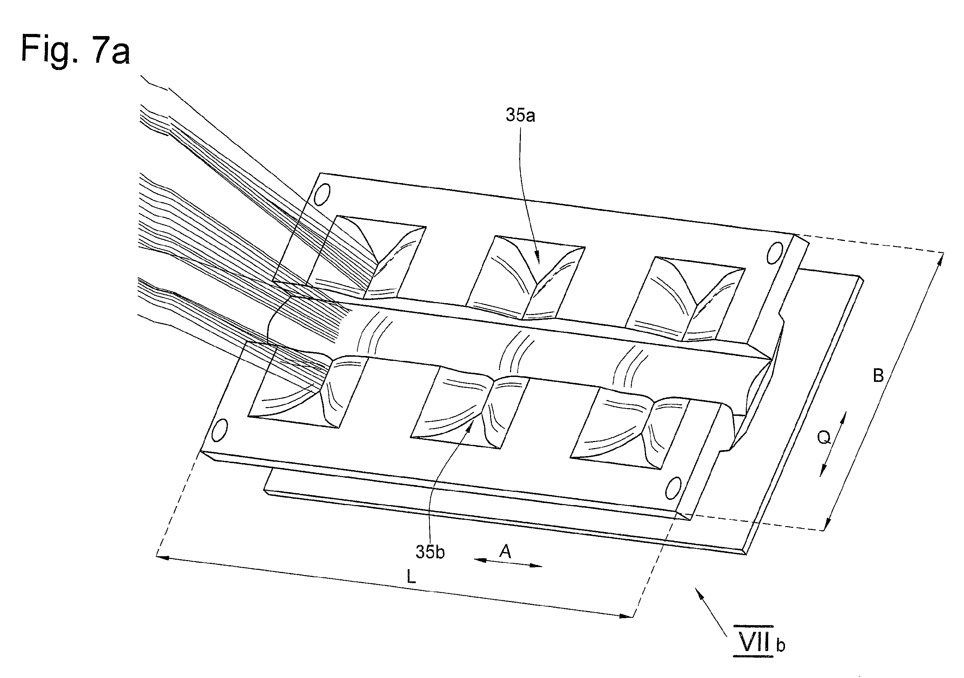

Bei dem nachfolgend beschriebenen Ausführungsbeispiel der Figuren 7a bis 11 sind gleiche Elemente mit gleichen Bezugszeichen bezeichnet.

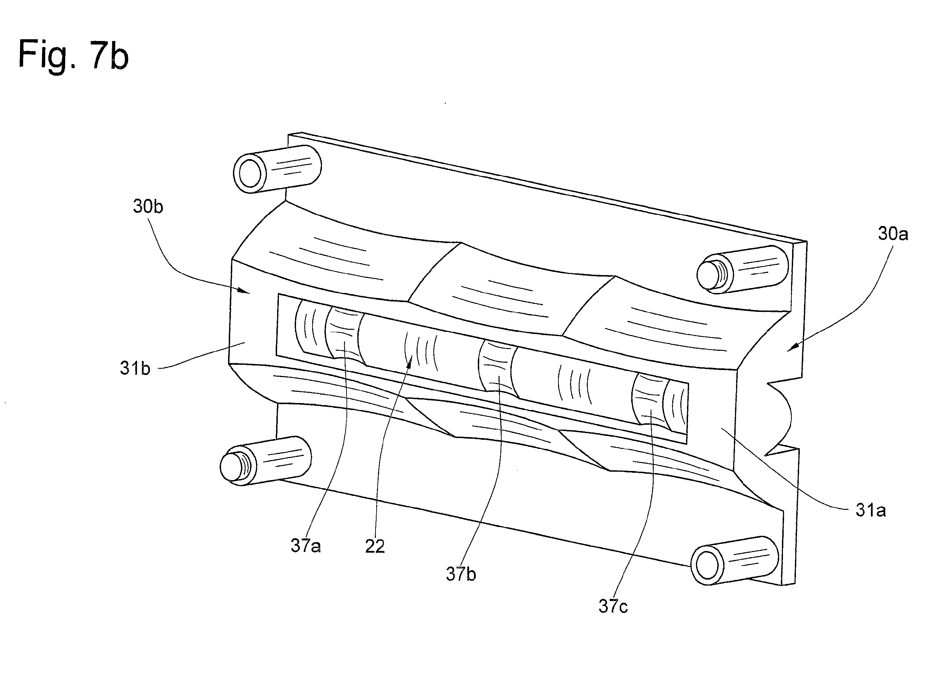

Die Kollimatoroptik der Fig. 7a weist gleichermaßen eine Länge L in Axialrichtung A und eine demgegenüber geringere Breite B in Querrichtung Q auf. Wie sich am besten aus der Darstellung der Fig. 7b ergibt, ist bei der Kollimatoroptik 11 dieses Ausführungsbeispiels eine Höhlung 22 vorgesehen, die sich im Wesentlichen von einem Ende 30a der Kollimatoroptik 11 bis zum anderen Ende 30b erstreckt, die aber von Werkstoffabschnitten 31a und 31 b der Kollimatoroptik 11 randseitig verschlossen ist.

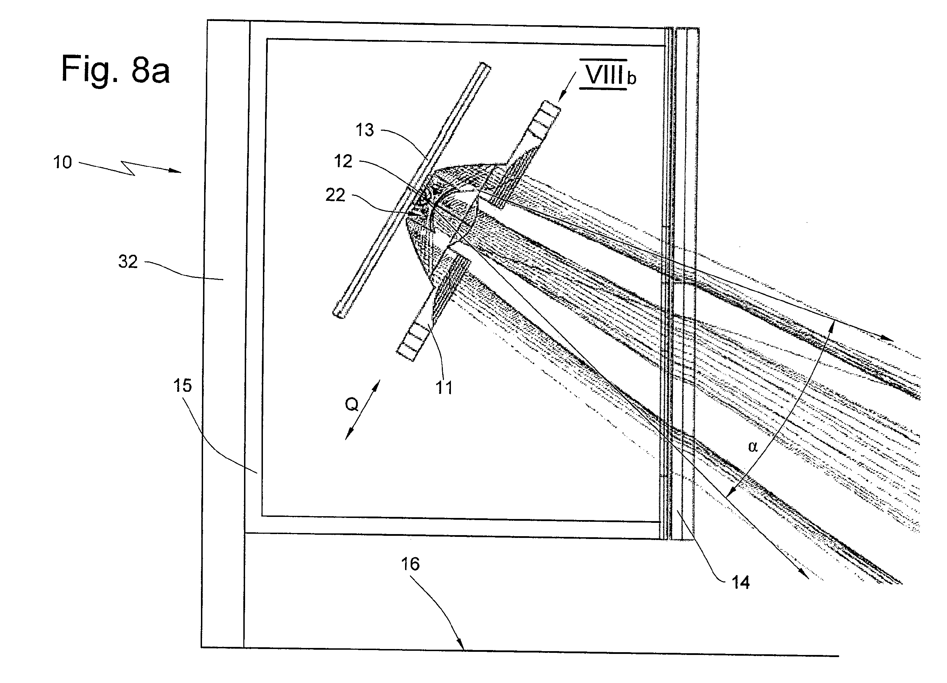

Diesem Ausführungsbeispiel ist mit dem vorherigen Ausführungsbeispiel gemeinsam, dass die Kollimatoroptik 11 als Bestandteil einer Leuchte 10 in einem Leuchtengehäuse 15 angeordnet ist (Fig. 8a). Wie Fig. 8a des Weiteren zeigt, kann auch hier ein Abschlussglas 14 vorgesehen sein.

Die Anordnung der Fig. 8a macht deutlich, dass die Leuchte 10 dieses Ausführungsbeispiels beispielsweise als Pollerleuchte angeordnet sein kann und eine nur schematisch angedeutete Bodenwand 16 beleuchten soll. Hierzu kann die Leuchte auf einem lediglich sehr schematisch angedeuteten Mast 32 angebracht sein.

Alternativ zu der Darstellung einer Mastleuchte gemäß Fig. 8a kann die Leuchte der Fig. 8a auch als Einbauleuchte an der Wand eines Gebäudes vorgesehen sein und eine Bodenfläche streifenförmig ausleuchten.

Wiederum soll mit der erfindungsgemäßen Kollimatoroptik eine sehr enge, ovale, lineare Lichtverteilung auf einer Gebäude- oder Gebäudeteilfläche oder einer Außenfläche eines Gebäudes generiert werden.

Die Kollimatoroptik 11 weist eine zentrale Höhlung 22 auf, die eine oder vorzugsweise mehrere LEDs 12 übergreift. Die LEDs sind wiederum auf einer Platine 13 angeordnet.

Die Kollimatoroptik 11 ist bezüglich ihrer Mittellängsebene M im Wesentlichen symmetrisch ausgebildet. Entlang der Schnittebene der Fig. 8a, die die Querrichtung Q enthält, erfolgt eine sehr enge Kollimation über einen Abstrahlwinkelbereich α, der nur wenige Grad beträgt. Wiederum soll hier eine sehr schmal strahlende Lichtverteilung generiert werden.

Demgegenüber zeigt die Darstellung der Fig. 8b dass entlang einer Schnittebene quer dazu, welche die Axialrichtung A enthält, eine Abstrahlung über einen sehr großen Abstrahlbereich β von nahezu 180° gewünscht wird.

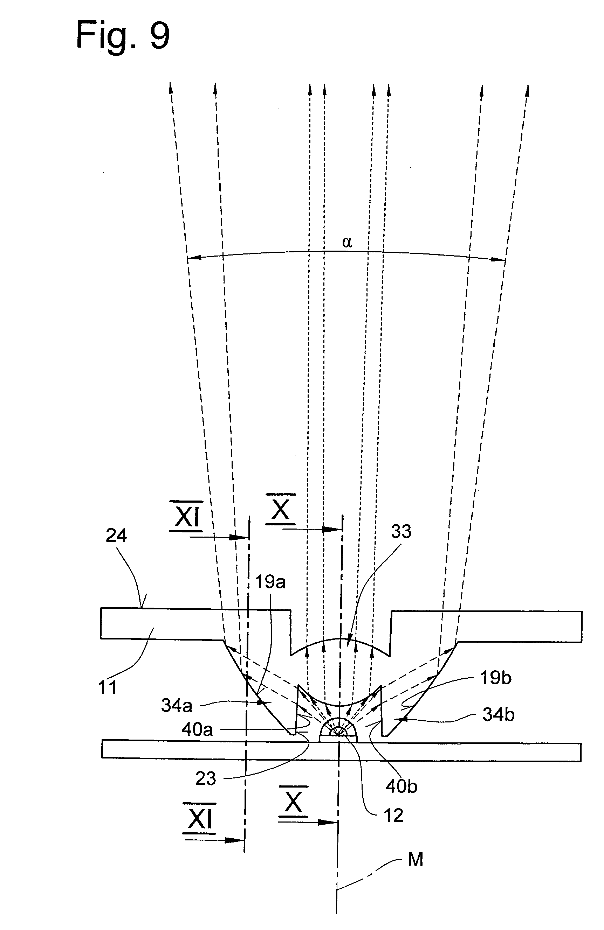

Anhand der Figuren 9 bis 11 sollen nun Details der Kollimatoroptik erläutert werden:

Fig. 9 macht deutlich, dass die Kollimatoroptik im Hinblick auf die Mittelebene M im Wesentlichen symmetrisch ausgebildet ist. Sie umfasst einen Mittelabschnitt 33 und zwei Seitenabschnitte 34a, 34b.

Der Mittelabschnitt 33 ist bei dem Ausführungsbeispiel als Bi-Konvexlinse ausgebildet und dient einer Bündelung der zentral von der LED abgestrahlten Lichtanteile.

Die radial äußeren, von der LED emittierten Lichtanteile treten durch plan ausgebildete Abschnitte 40a, 40b Lichteintrittsfläche 23 der Kollimatoroptik 11 hindurch, und treffen auf randseitig angeordnete Totalreflektionsflächen 19a, 19b. Von dort werden die Lichtanteile nach außen gelenkt und verlassen die Lichtaustrittsfläche 24 unter einem engen Abstrahlwinkel α.

Bei Betrachtung der Schnittebenen der Figuren 10 und 11, welche jeweils die Axialrichtung A enthalten, wird deutlich, warum in dieser Ebene eine Abstrahlung mit einem erheblich größeren Abstrahlwinkel β erfolgt.

Wiederum ist die Höhlung 22 von einem Linsenelement 29 übergriffen, das - je nach dem, welche Schnittebene der Fig. 9 betrachtet wird - unterschiedliche Wandstärken aufweist. So weist das Linsenelement 29 gemäß der Schnittebene der Fig. 10 die Wandstärke W1 und gemäß der Schnittebene der Fig. 11 die Wandstärke W2 auf.

Insbesondere unter Bezugnahme auf die Figuren 7a und 7b wird aber deutlich, dass im Bereich der Lichteintrittsfläche 23 der Kollimatoroptik und in dem Bereich der Lichtaustrittsfläche 24 der Kollimatoroptik noch weitere, besonders gestaltete optische Grenzflächen vorgesehen sind.

So ist insbesondere aus Fig. 7a ersichtlich, dass der Mittelabschnitt 33 mit seiner Außenseite vollständig zylindrisch ausgebildet ist.

Die Abschnitte der Lichtaustrittsfläche 24 der Seitenabschnitte 34a, 34b sind demgegenüber aber unterschiedlich ausgebildet. So sind insbesondere aus den Figuren 7a und 11 ersichtlich, jeweils gegenüberliegend der LEDs auf der Außenseite in den Grenzflächen sickenförmige Vertiefungen 35 vorgesehen. Die entsprechenden Flächenabschnitte sorgen für eine Vergrößerung des Abstrahlwinkels.

Gleichermaßen lässt Fig. 7b erkennen, dass auf der Lichteintrittsfläche 23 der Höhlung 22, und zwar insbesondere im Bereich der Deckenwand 36 der Höhlung 22, gleichermaßen sickenförmige Ausnehmungen 37a, 37b, 37c vorgesehen sind, die gleichermaßen zu einer Aufspreizung des Lichtes beitragen.

Wie sich insbesondere aus Fig. 4 ergibt, ist das Innenmaß 38 der Höhlung 22 in Querrichtung Q erheblich kleiner als die Breitenerstreckung B der Kollimatoroptik in Querrichtung Q.

Andererseits macht beispielsweise die Fig. 5 deutlich, dass das Innenmaß 39 der Höhlung 22 in Axialrichtung A im Wesentlichen der Längenerstreckung L der Kollimatoroptik 11 entspricht.

Auch wird aus der Geometrie deutlich, dass das Innenmaß 39 der Höhlung 22 in Axialrichtung A erheblich größer ist als das Innenmaß 38 der Höhlung 22 in Querrichtung Q.

Das Ausführungsbeispiel der Figuren 7a bis 11 kann, wie dem Fachmann ohne weiteres ersichtlich ist, nicht im Extrusionsverfahren hergestellt werden, sondern wird vorzugsweise im Spritzgießverfahren gefertigt.

Hier ist die Kollimatoroptik 11 nicht exakt zylindrisch. Die Höhlung 22 ist aber im Wesentlichen zylindrisch, mit Ausnahme der bezüglich der Grundkontur vernachlässigbaren Ausnehmungen 37a, 37b, 37c und 35a, 35b, 35c.

## Patentansprüche

1. Kollimatoroptik (11) für eine Leuchte, mit einer Längserstreckung (L) in Axialrichtung (A) und einer Breitenerstreckung (B) in einer quer zur Axialrichtung verlaufenden Querrichtung (Q), wobei die Längserstreckung der Kollimatoroptik größer ist als die Breitenerstreckung, und mit einer in Axialrichtung verlaufenden, zylindrischen oder im Wesentlichen zylindrischen Höhlung (22) zur Aufnahme wenigstens einer LED (12), die ein Innenmaß (38) in Querrichtung (Q) aufweist, das nur einen Bruchteil der Breitenerstreckung (B) der Kollimatoroptik beträgt, und die ein Innenmaß (39) in Axialrichtung (A) aufweist, das der gesamten oder im Wesentlichen der gesamten Längserstreckung (L) der Kollimatoroptik entspricht.

2. Kollimatoroptik (11) für eine Leuchte nach Anspruch 1, **dadurch gekennzeichnet, dass** der Höhlung optische Grenzflächen (19, 20, 21) zugeordnet sind, die eine Kollimation des Lichtes entlang einer Ebene, die die Querrichtung enthält, veranlassen, und die für eine breite Lichtabstrahlung unter einem großen Winkel entlang einer Ebene, die die Axialrichtung enthält, sorgen.

3. Kollimatoroptik (11) für eine Leuchte, mit einer Längserstreckung (L) in Axialrichtung (A) und einer Breitenerstreckung (B) in einer quer zur Axialrichtung verlaufenden Querrichtung (Q), wobei eine sich in Axialrichtung erstreckende zylindrische oder im Wesentlichen zylindrische Höhlung (22) zur Aufnahme wenigstens einer LED (12) vorgesehen ist, wobei der Höhlung optische Grenzflächen (19, 20, 21) zugeordnet sind, die eine Kollimation des Lichtes entlang einer Ebene, die die Querrichtung (Q) enthält, veranlassen, und die für eine breite Lichtabstrahlung unter einem großen Winkel (β) entlang einer Ebene, die die Axialrichtung (A) enthält, sorgen.

4. Kollimatoroptik (11) für eine Leuchte nach Anspruch 3, **dadurch gekennzeichnet, dass** die Höhlung ein Innenmaß (38) in Querrichtung aufweist, das nur einen Bruchteil der Breitenerstreckung (B) der Kollimatoroptik beträgt, und ein Innenmaß (39) in Axialrichtung (A) aufweist, das der gesamten oder im Wesentlichen der gesamten Längserstreckung (L) der Kollimatoroptik entspricht.

5. Kollimatoroptik (11) für eine Leuchte, insbesondere nach einem der vorangegangenen Ansprüche, mit einer Längserstreckung (L) in Axialrichtung (A) und einer Breitenerstreckung (B) in einer quer zur Axialrichtung verlaufenden Querrichtung (Q), wobei eine sich in Axialrichtung erstreckende, zylindrische oder im Wesentlichen zylindrische, langgestreckte Höhlung (22) zur Aufnahme wenigstens einer LED (12) vorgesehen ist, wobei ein die Querrichtung enthaltender Querschnitt der Kollimatoroptik eine zwei Flügel (18a, 18b) aufweisende schmetterlingartige Form ausbildet, wobei radial aussen von der LED emittierte Lichtanteile Totalreflektionsflächen (19) an einem einer Lichtaustrittsfläche (24) der Kollimatoroptik (11) fernen Randabschnitt der Flügel erreichen und radial innen durch die Lichtaustrittsfläche austreten und wobei radial innen von der LED emittierte Lichtanteile zu Totalreflektionsflächen (21) an einem der Lichtaustrittsfläche (24) nahen Randabschnitt der Flügel gelenkt werden und nach Reflektion daran radial außen durch die Lichtaustrittsfläche austreten.

6. Kollimatoroptik (11) für eine Leuchte, insbesondere nach einem der vorangegangenen Ansprüche, mit einer Längserstreckung (L) in Axialrichtung (A) und einer Breitenerstreckung (B) in einer quer zur Axialrichtung verlaufenden Querrichtung (Q), wobei eine sich in Axialrichtung (A) erstreckende, zylindrische oder im Wesentlichen zylindrische, langgestreckte Höhlung (22) zur Aufnahme wenigstens einer LED (12) vorgesehen ist, wobei ein die Querrichtung enthaltender Querschnitt der Kollimatoroptik (11) einen Mittelabschnitt (33) und zwei den Mittelabschnitt einfassende Seitenabschnitte (34a, 34b) aufweist, wobei radial aussen von der LED emittierte Lichtanteile Totalreflektionsflächen (19a, 19b) an den Seitenabschnitten erreichen und radial außen durch die Lichtaustrittsfläche austreten, und wobei radial innen von der LED emittierte Lichtanteile durch den Mittelabschnitt (33) hindurch verlaufen, und radial innen durch die Lichtaustrittsfläche austreten.

7. Kollimatoroptik (11) für eine Leuchte nach einem der vorangegangenen Ansprüche, **dadurch gekennzeichnet, dass** die Kollimatoroptik eine Lichtaustrittsfläche (24) mit einer im Wesentlichen rechteckförmigen Kontur aufweist.

8. Kollimatoroptik (11) für eine Leuchte nach einem der vorangegangenen Ansprüche, **dadurch gekennzeichnet, dass** die Kollimatoroptik einen die Querrichtung (Q) enthaltenden Querschnitt aufweist, der Seitenwandabschnitte (34a, 34b) umfasst, die Totalreflektionsflächen (19a, 19b) bereitstellen.

9. Kollimatoroptik (11) für eine Leuchte nach einem der vorangegangenen Ansprüche, **dadurch gekennzeichnet, dass** die Kollimatoroptik einen konstanten oder einen im Wesentlichen konstanten, die Querrichtung (Q) enthaltenen, Querschnitt entlang ihrer Axialerstreckung aufweist.

10. Kollimatoroptik (11) für eine Leuchte nach einem der vorangegangenen Ansprüche, **dadurch gekennzeichnet, dass** die Kollimatoroptik einen die Axialrichtung (A) enthaltenden Querschnitt aufweist, der von einem Linsenelement (29) bereitgestellt ist.

11. Kollimatoroptik (11) für eine Leuchte nach einem der vorangegangenen Ansprüche, **dadurch gekennzeichnet, dass** das Innenmaß (39) der Höhlung (22) in Axialrichtung (A) entlang der Längserstreckung (L) der Kollimatoroptik frei gehalten ist.

12. Kollimatoroptik (11) für eine Leuchte nach Anspruch 10, **dadurch gekennzeichnet, dass** das Linsenelement (29) planparallel oder im Wesentlichen planparallel ausgebildet ist.

13. Kollimatoroptik (11) für eine Leuchte nach Anspruch 10 oder 12, **dadurch gekennzeichnet, dass** das Linsenelement (29), insbesondere in einem Bereich nahe der LED, Wölbungen oder Ausnehmungen aufweist.

14. Kollimatoroptik (11) für eine Leuchte nach einem der vorangegangenen Ansprüche, **dadurch gekennzeichnet, dass** sie bezüglich einer Mittelachse (M), die parallel zur Axialrichtung ausgerichtet ist, spiegelsymmetrisch oder im Wesentlichen spiegelsymmetrisch ausgebildet ist.

15. Leuchte (10), insbesondere ortsfest angeordnete Leuchte, umfassend wenigstens eine Kollimatoroptik (11) nach einem der vorangegangenen Ansprüche.
